# EUROPEAN PATENT APPLICATION

(11) **EP 0 592 179 A1**
(43) Date of publication of application: **13.04.1994**
(21) Application number: 93307885.9
(22) Date of filing: 05.10.1993
(51) Int. Cl.: B23P 6/00, B23P 6/02, B23P 15/10

(54) **Reconditioning engine parts**

(30) Priority: 06.10.1992 GB 9220950
(71) Applicant: METALOCK (SINGAPORE) LIMITED, 2262-Singapore (SG)
(72) Inventor: Lindblad, Kurt Robert Malcolm, Singapore 0512 (SG)
(74) Representative: Driver, Virginia Rozanne

(57) **Abstract**

A method of reconditioning an engine part, for example a piston or spindle, is described. The method comprises machining the worn surface so that it is substantially flat, placing an annular repair part adjacent the annular surface, welding the repair part to the annular surface by electron beam welding and then machining a working surface of the repair part to dimensions corresponding to that desired in the engine part. The method is particularly suitable for the reconditioning of pistons and valve spindles for marine engines.

## Description

The present invention relates to the reconditioning of engine parts and particularly but not exclusively to the reconditioning of pistons and valve spindles used in marine engines.

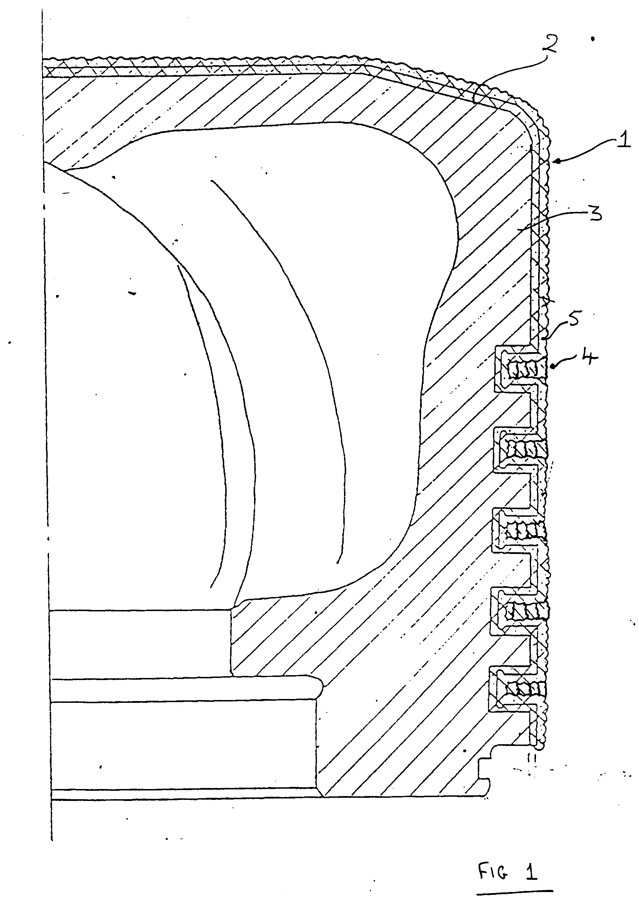

Pistons used in marine engines naturally suffer wear and tear during use. A particular type of wear is to the grooves of the piston which are intended to carry piston rings. Wear of these grooves causes the piston rings to become slack and can be accompanied by cracks appearing. Generally, the top crown and annular surface of the piston will also be burnt. At this point, the piston must be discarded and replaced or repaired. The known repair procedure involves the following steps. The worn grooves are machined together with the burnt side and top crown of the piston down to sound base metal in preparation for weld. A dye penetrant check is carried out to ensure that all defects which have been located have been thoroughly removed during the machining process. The piston is then rebuilt by machine welding using a conventional welding technique so that the piston grooves and the crown and sides of the piston are completely coated with weld material. In this regard, reference is made to Figure 1 which illustrates a piston 1 having a crown 2 and a side 3. The piston also has grooves 4. The weld material is indicated by reference numeral 5. As shown in Figure 1, the grooves are completely filled with weld metal. On certain types of piston if the grooves are only partially filled problems may be encountered during welding such as cracks at the bottom corner and unacceptable distortion.

Once the piston has been rebuilt with weld, it is machined to its original size. This includes remachining each of the grooves to their desired dimensions. While this process provides a well reconditioned piston, it is time consuming and wasteful of weld material. Although it varies with piston type and size, on average, a depth of 28mm of weld metal is to be removed from each groove. After remachining the working surfaces of the grooves are chrome plated. This involves the masking of the crown top, side and inner bore of the piston prior to immersion of the piston in a plating tank.

The present invention seeks to overcome these difficulties by providing a new method of reconditioning engine parts.

According to the present invention there is provided a method of reconditioning an engine part comprising at least an annular surface which has been worn, the method comprising the steps of:
machining the worn surface so that it is substantially flat;
placing an annular repair part adjacent said annular surface;
welding said repair part to said annular surface by electron beam welding; and
machining a working surface of the repair part to dimensions corresponding to that desired in the engine part.

Electron beam welding is a welding technique which uses a finely focused beam of electrons produced by an electron gun to form a narrow, deep weld between two metal surfaces. The technique is described for example in an article by P.J. Blakely "Electron beam welding: some questions answered" published in the Welding Institute Research Bulletin in May 1983. Electron beam welding can be used to facilitate welding of most hardened or work strengthened metals and produces a weid with a high depth to width ratio. In particular, it can be used to weld steels, including stainless steel, titanium and nickel alloys. The technique has the advantages of having a low heat input, negligible distortion and shrinkage and a narrow heat-affected zone.

No filler metal is required and the speed of weld is significantly faster than that which is conventionally used to recondition engine parts as described above. The technique has been found to provide particular advantages when used to recondition pistons for marine engines. Such pistons have a plurality of annular grooves inset into the external annular surface of the piston which grooves are intended to carry piston rings in use. To recondition these pistons, the inner surfaces of each groove are firstly machined flat and then a pair of mild steel rings is inserted abutting respective ones of the upper and lower surfaces of the groove and these rings are then electron beam welded into place. Finally, the inner surfaces of the rings are machined to bring the grooves back to their original dimensions. If the rings which are inserted already bring the grooves back to their original dimension, no further machining step is required. It is possible to utilise rings the working surface of which are already chromeplated. By chromeplating the rings in advance additional savings can be made such as:
elimination of the masking step required when the grooves are chromeplated on the piston;
easy handling of the rings as compared with a piston, which could weigh around a tonne;
piston repair time is reduced;
minimal machining/grinding operations required to working surfaces after welding.

Another part for which the technique is particularly applicable is a spindle valve which has a worn outer annular surface. The worn surface is machined back to provide a flat annular surface and an annular nimonic ring is then electron beam welded to that flat surface.

In this way, these engine parts can be reconditioned more quickly and efficiently than has been the case in the past. In particular, the amount of material to be machined in the final machining step is significantly less than in the known method.

For a better understanding of the present invention and to show how the same may be carried into effect reference will now be made by way of example to the accompanying drawings in which:-
Figure 1 illustrates a known method of reconditioning;
Figures 2a to 2e illustrate a method according to one embodiment of the invention applied to pistons;
Figures 3a to 3c illustrate a second embodiment of the present invention applied to valve spindles; and
Figures 4a to 4c illustrate an alternative way for reconditioning valve spindles.

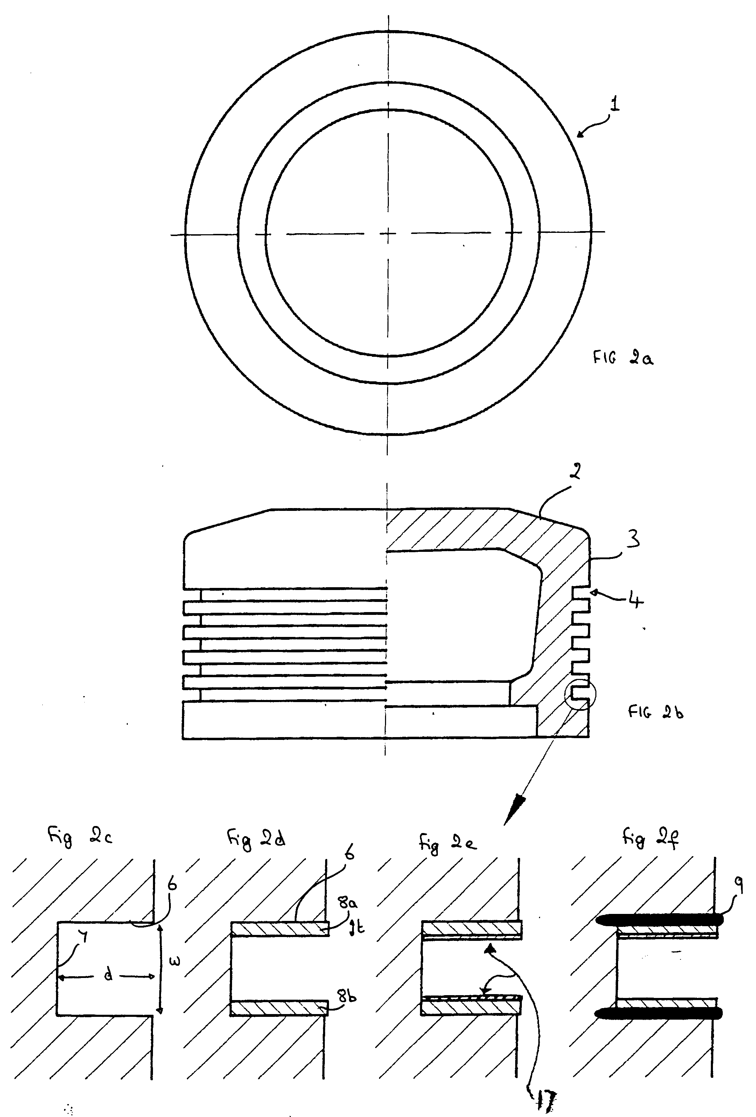

Reference will now be made to Figure 2 to describe a method of reconditioning marine pistons. Figure 2a is a plan view of a piston for reconditioning and Figure 2b is a partially sectioned view from the side. Like numerals designate like parts as in Figure 1, that is the piston has a crown 2, side walls 3 and annular grooves 4 for receiving piston rings. When new, the grooves of the piston would have had a certain dimension, for example a depth d of 28mm and width w of 18mm When the piston arrives for reconditioning, the first steps to be taken are those associated with the prior art method, namely the machining back and rebuild by welding of the crown, top and sides of the piston in a conventional manner, that is using for example submerged arc welding with the addition of a filler wire to build up the base material. Then the base 7 of each groove is checked to determine the state of wear. If the groove diameters are still within acceptable tolerance and the surface appears satisfactory then it is left untreated. Otherwise it is cleaned and a small amount of weld is deposited by conventional welding to build up the groove diameter. The next step is to machine back the upper and lower side surfaces 6 of the grooves 4 until they are flat. The next step is to insert into each groove a pair of steel rings 8a,8b abutting respective ones of the upper and lower surfaces 6 of the grooves 4 (Figure 2d). These steel rings are then electron beam welded into place, the weld being designated by reference numeral 9 in Figure 2f. Finally, the inner surfaces of the rings 8a,8b are machined to the original width values of the piston grooves as new. The thickness of each steel ring can be for example t=5mm. The grooves can then be chromplated by immersion of the piston with the crown, top and sides appropriately masked in a plating bath.

As shown in Figure 2e, as an alternative one or both of the steel rings can have a working surface which has already been chromeplated as designated by reference numeral 17. This minimises the final machining/grinding step and provides a hard surface for subsequent use.

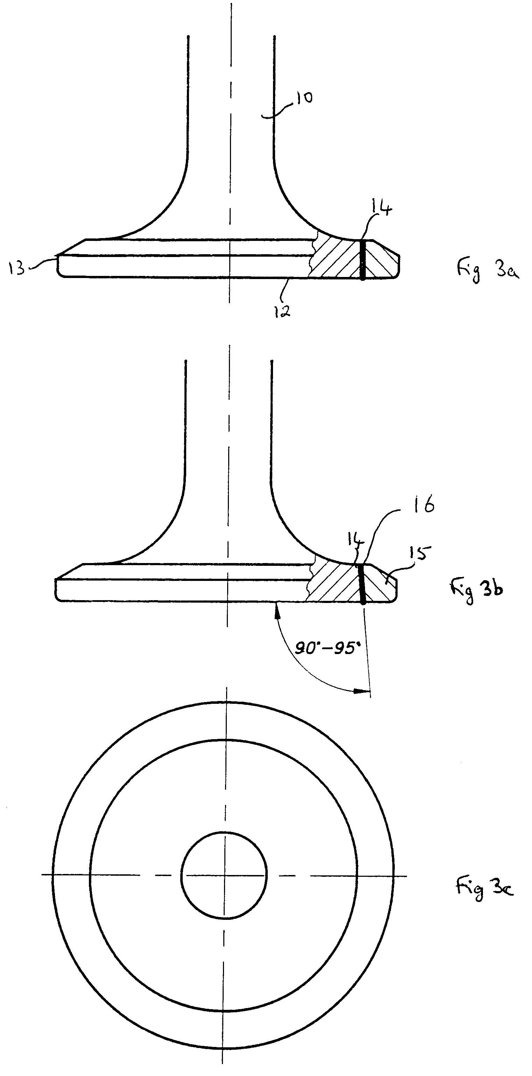

The repair of a valve spindle will now be described with reference to Figure 3a to 3c. Figure 3a illustrates a valve spindle having a shaft 10 which supports a valve surface 12 which is flat and circular. The valve surface 12 has an annular edge 13 subject to wear in use of the valve spindle. When the valve spindle arrives for reconditioning, the outer annular surface is machined back to provide a flat weld surface 14. An outer annular ring 15 of a hardened material such as a nimonic 80 alloy is then electron beam welded to the machined surface 14, the weld being designated by reference numeral 16 in Figure 3b. The machined surface 14 can be angled perpendicularly to the valve surface 12 or can be at an angle which is slightly greater than 90° as illustrated in Figure 3b. This taper reduces the chances of the outer ring 15 falling away from the spindle in use where it could fall into the engine and cause serious damage.

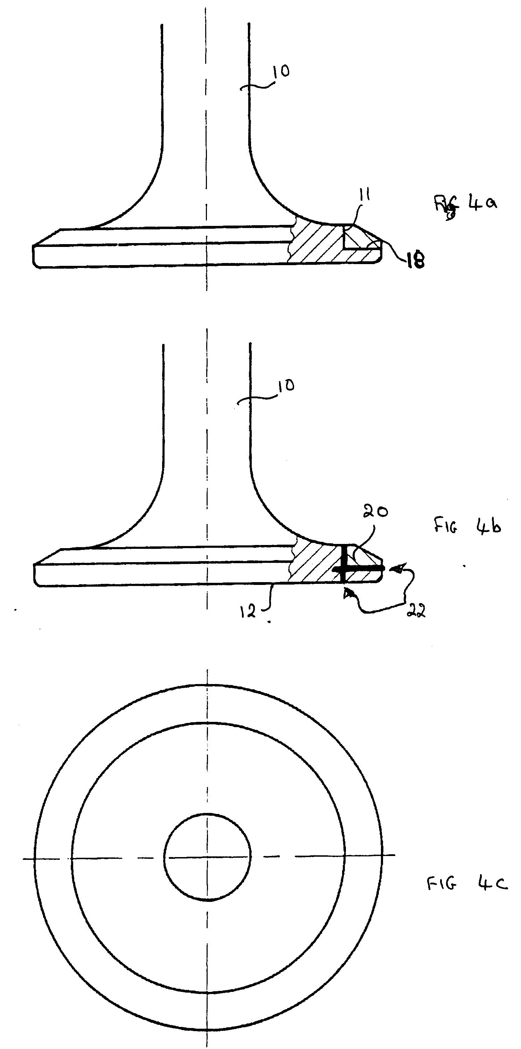

As an alternative to removing the whole of the outer annular surface of the valve spindle, an angled part can be removed to provide two machined surfaces 11,18, one perpendicular to the valve surface 12 and one parallel to the valve surface 12. This is illustrated in Figures 4a to 4c. A comparable replacement part 20 is then placed in abutment with these surfaces and electron beam welded 22 into place.

Table I gives a comparison between the conventional welding processes and the new electron beam welding process as used for the repair of pistons and valve spindles.

The electron beam welding process can be used to attach either similar or dissimilar repair parts to the parts being reconditioned. Thus, it is particularly useful for joining an expensive wear and/or heat resisting metal with special properties to a less expensive base material. This will provide the reconditioned part with additional wear qualities. There is furthermore a significant reduction in the time required as can be seen from the following table:

| WELDING PROCESS | ELECTRON BEAM | SUBMERGED ARC |
|---|---|---|
| 1 ring groove | 9.8 minutes | 96 minutes |
| 5 ring grooves | 49 minutes | 480 minutes |

The actual welding time to complete 1 piston is less than 1 hour by the electron beam welding process and 8 hours for submerged arc welding, giving substantial savings in both welding times and welding consumables (filler wire and flux).

**TABLE I**

| WELD PROCESS | SAW | EBW-HV |
|---|---|---|
| Material: | AISI 1020 Steel | AISI 1020 Steel |
| Thickness: | 2.0" | 2.0" |
| Joint Preparation: | V groove with backing 60° included angle | bead on plate no joint |
| Number of passes: | 37 | 1 |
| Weld Speed: | 30"/min/pass | 15"/min |
| Current/voltage: | 1 pass - 450A/26V | 1 pass - 10A/150 KV |
| | 36 passes - 700A/34V | |
| | (All D-C Reverse) | |
| Energy/unit length: | 1750 KJ/in | 60 KJ/in |
| Filler Wire - Type : | Mild steel | None |
| Speed: | 66"/min | N/A |
| Size: | 5/32" | N/A |

## Claims

1. A method of reconditioning an engine part comprising at least an annular surface which has been worn, the method comprising the steps of:
machining the worn surface so that it is substantially flat;
placing an annular repair part adjacent said annular surface;
welding said repair part to said annular surface by electron beam welding; and
machining a working surface of the repair part to dimensions corresponding to that desired in the engine part.

2. A method as claimed in claim 1 when used to recondition pistons for marine engines.

3. A method as claimed in claim 2 wherein each piston has a plurality of annular grooves intended to carry piston rings and wherein the method comprises:
machining flat the upper and lower inner surfaces of each groove; and
inserting into each groove a pair of metallic rings abutting respective ones of the upper and lower surfaces of each groove and securing these rings to the upper and lower surfaces by electron beam welding.

4. A method as claimed in claim 3 wherein the inner surfaces of the rings are machined to reflect the desired dimensions of the grooves.

5. A method as claimed in claim 3 wherein the inner surfaces of the rings have been chromeplated before insertion into the groove.

6. A method as claimed in claim 1 when used to recondition a valve spindle.

7. A method as claimed in claim 6 wherein a worn outer annular surface of the valve spindle is machined to provide a flat surface to which an annular component is secured by electron beam welding.

8. A piston which has been reconditioned using the method according to any of claims 1 to 7.

9. A valve spindle which has been reconditioned according to any one of claims 1 to 7.
